Europäisches Patentamt

European Patent Office

Office européen des brevets

(19)

(11) Publication number: **0 081 926**
A2

# EUROPEAN PATENT APPLICATION

(21) Application number: 82306202.1

(22) Date of filing: 22.11.82

(51) Int. Cl.³: **C 08 J 5/18,** B 29 D 7/24,
C 08 J 7/04, B 32 B 27/36

(30) Priority: 24.11.81 US 324506

(43) Date of publication of application: 22.06.83
Bulletin 83/25

(84) Designated Contracting States: CH DE FR GB LI

(71) Applicant: AMERICAN HOECHST CORPORATION,
Route 202-206 North, Somerville, N.J. 08876 (US)

(72) Inventor: Hopper, Michael, 15 Eastwood Drive, Taylors S.
Carolina 29687 (US)
Inventor: Martin, Michael, 206 Glenn Road, Greenville
South Carolina 29607 (US)

(74) Representative: De Minvielle-Devaux, Ian Benedict
Peter et al, CARPMAELS & RANSFORD 43, Bloomsbury
Square, London WC1A 2RA (GB)

(54) Coated uniaxially oriented polyester film.

(57) A process for preparing a uniaxial polyester film which comprises:

a) extruding a moving molten web of polyester film; and

b) quenching the moving web to solidify it in a substantially amorphous form; and

c) applying a coating of a dispersed aqueous composition of polyvinyl alcohol or polyurethane to at least a portion of the surface of said film; and

d) stretching the moving web in a direction transverse to the direction of motion while heating the web at a temperature of from about its glass transition temperature to about 160 °C; and

e) crystallising the transversely restrained moving web by heating it to a temperature in the range of 130 °C to 240 °C without stretching said web; and

f) cooling said web to substantially ambient atmospheric temperature.

## COATED UNIAXIAL POLYESTER FILM

It has been a problem in the art to produce a clear, thermoplastic film which is tough, chemically resistant and which is useful for optically critical purposes such as the production of polarisers. Biaxially oriented polyester film, while it is clear and tough, has an optic axis plane angle which varies from point to point across the web. This variation of orientation of the optic axis plane precludes the use of biaxially oriented polyester film for most such optically critical applications.

In the production of polarising sheets, a film of a substrate is laminated to a film of polyvinyl alcohol. This laminate is then passed through an aqueous staining bath containing iodine and one or more iodide salts to tint the polyvinyl alcohol film. Numerous other stabilising treatments may then optionally be employed.

The present invention provides an improved substrate which is useful for the formation of polarised sheeting. Such improved substrate possesses a very low extinction angle, thus making it highly useful for polarising applications, and at the same time demonstrates increased adhesion to the polyvinyl alcohol film to which it is laminated. It also demonstrates improved thermal dimensional stability, an improved moisture barrier and reduced water and solvent content.

The present invention provides a coated polyester film useful in the manufacture of polarisers which is produced by the process of:

    a) extruding a moving molten web of polyester film; and

    b) quenching the moving web to solidify it in a substantially amorphous form; and

    c) applying a coating comprising a dispersed aqueous composition of polyvinyl alcohol or polyurethane to at least a portion of the surface of said film; and

    d) stretching the moving web in a direction transverse to the direction of motion while heating the web at a temperature of from about its glass transition temperature to about 160°C; and

e)  crystallising the moving web by heating it to a temperature in the range of 130°C to 240°C without stretching said web; and

f)  cooling said web to substantially ambient atmospheric temperature.

The important feature of the produced film is that it has a very low extinction angle. Extinction is the condition exhibited by a crystal when its optic axial plane is aligned with one of a pair of crossed polaroids. The extinction angle is the angle through which a crystal is revolved from a definite line (as that of the crystallographic axis) to the plane of maximum extinction. For a birefringent film, the extinction angle is the inclination of the optic axial plane to the transverse stretch direction. The extinction angle of the present film is to be as close to zero as possible. The angle may range from 0° to 6°, preferably 0° to 3° and most preferably 0°.

The present invention provides a clear, flexible, uniaxially oriented polyester film which exhibits the quality physical characteristics of conventional polyester films and exhibits the optically desirable quality of having a 0° to 6° extinction angle and improved adhesion to polyvinyl alcohol films.

The flexible polyester film of the present invention may be any flexible film formed from any thermoplastic film forming polyester which is produced by condensing a dicarboxylic acid or a lower alkyl diester thereof with a glycol. Among the dicarboxylic acids and their lower alkyl diesters which may be employed to form a flexible polyester film support are terephthalic; isophthalic, phthalic, 2,5-; 2,6-, and 2,7-naphthalene dicarboxylic, succinic; sebacic; adipic; azelaic; b benzoic; the hexahydrophthalics, and bis-p-carboxyphenoxyethane. One or more of these acids and/or their lower alkyl diesters is reacted with one or more glycols which include ethylene glycol; diethylene glycol; 1,3-propanediol; 1,4-butanediol; neopentyl glycol or 1,4-cyclohexanedimethanol. Since one or more diesters may be reacted with one or more glycols, the polyester film of this invention is not limited to homopolyesters, but also includes mixed polyesters such as copolyesters.

Of the film forming polyesters within the contemplation of this invention, preferred are those containing at least a major amount of polyethylene terephthalate, the most preferred being polyethylene terephthalate. Polyethylene terephthalate film is formed from a polymer produced by polymerisation of bis-(2-hydroxyethyl) terephthalate. Bis-(2-hydroxyethyl) terephthalate is itself formed as an intermediate by one of two different methods. One method for producing bis-(2-hydroxethyl) terephthalate is by direct esterification of terephthalic acid with ethylene glycol as described in U.S. Patent 3,050,533. In this method, the by-product of the reaction is water which is distilled from the reaction product. A second method for producing bis-(2-hydroxyethyl) terephthalate is by transesterification of a dialkyl ester of terephthalic acid, preferably dimethyl terephthalate, with ethylene glycol. Preferably, two molecular proportions of ethylene glycol react with one molecular proportion of the dialkyl terephthalate. More preferably, more than two molecular proportions of ethylene glycol per molecular proportion of the dialkyl terephthalate are used since under these conditions the initial transesterification reaction occurs more rapidly and completely. The transesterification reaction is conducted under conditions of elevated temperature. For example, a temperature in the range of from about the boiling temperature of the reaction mixture to as high as 250° may be used. The reaction can occur at atmospheric, sub-atmospheric or super-atmospheric pressure. The by-product of the transesterification reaction is an alkanol. For example, if dimethyl terephthalate is used, methanol is produced. The alkanol is removed from the reaction product. In order to increase the reaction rate, many known catalysts may be employed in the transesterif-cation reaction, as desired.

After the bis-(2-hydroxyethyl) terephthalate has been produced, it may be converted to polyethylene terephthalate by heating at a temperature above the boiling point of the ethylene glycol or the reaction mixture under conditions affecting the removal of the glycol or water. The heating may occur at a temperature as high as 325°C, if desired. During heating, pressure is reduced so as to provide rapid distillation of the excess glycol or water. The final polyethylene terephthalate polymer may have an intrinsic viscosity, as measured in orthochlorophenol at 25°C, in excess of 0.3 decilitre per gram. More preferably, the intrinsic viscosity of the polymer ranges from about 0.4 to about 1.0 decilitre per gram, again measured in orthochlorophenol at 25°C. Still more preferably, the polyethylene terephthalate employed in the present invention has an intrinsic viscosity of about 0.5 to about 0.7 decilitre per gram as measured in orthochlorophenol at 25°c.

In a preferred embodiment, the polyester film forming polymer is melted and thereafter extruded onto a polished revolving casting drum to form a cast, flexible sheet of the polymer. Then to the polyester film is applied a substantially clear coating comprising a dispersed aqueous composition of polyvinyl alcohol or polyurethane. Thereafter, the film is first uniaxially stretched in a tenter frame while being heated to a temperature in the range of 80°C to 160°C, preferably in the range of 90° to 100°C. The stretched film is stretched about 2 to 6 times its original dimension and preferably 2.5 to 4.5 times, most preferably 4 times. It is important that the stretching temperature is above the glass transition temperature of the film. The film is then crystallised by heating to a temperature of from about 130°C to about 240°C, preferably 150° to 180°C, while being transversely restrained but without film stretching. Crystallising is normally complete when this treatment is performed for about five seconds or more. The film is then cooled to substantially ambient atmospheric room temperature. The thus-produced film may have a thickness of from 0.48 to 30 mils (0.0112 to 0.76 mm), preferably 1 to 9 mils (0.025 to 0.229 mm), most preferably 3 to 7 mils (0.076 to 0.178 mm).

In the preferred embodiment, the dispersed polyvinyl alcohol composition is an aqueous solution of polyvinyl alcohol containing from about 2% to about 25% solids by weight, preferably 5% to 20%, most preferably 5% to 10% although the skilled artisan may use more or less for his purposes. The preferred polyvinyl alcohol is hydrolysed from about 33% to about 99%. The coating composition is preferably gravure rolled onto the polyester substrate at a coating weight of from about .07 to about 1.0 dry pound of coating per thousand square feet (0.34 to 4.8 $g/m^2$) of film before stretching, although the skilled artisan may use more or less for his purpose. The most preferred polyvinyl alcohol is Vinol 205 which is an 89% hydrolyzed product of Air Products, Inc. of Greenville, South Carolina. Other useful polyvinyl alcohols include Mowiol 4-88; 8-88; 4-98 66-100 and 13.72 available from Hoechst AG, of Frankfurt, West Germany.

Useful polyurethanes include Neo-rez R-940, R-960 and R-963 aqueous polyurethane dispersions. The preferred polyurethane composition useful for the present invention is a water dispersion of Neo-rez R-943 polyurethane, all available from Polyvinyl Chemical Co. The preferred dispersion comprises from about 15% to about 40% solids by weight, preferably from about 15% to 30% and most preferably from about 15% to about 20% of the polyurethane, although the skilled artisan may use more or less for his purposes. It is preferably applied at a coating weight of from about 0.7 to about .35 dry pound of coating per thousand square feet (0.34 to 1.7 $g/m^2$) of film before stretching, although the skilled artisan may use more or less for his purposes.

An important criterion in judging compositions useful in the context of the present invention includes a high degree of clarity when the polyester is coated, stretched and crystallised. Also, the coating should not be so soft as to cause the film to block when being rolled. Furthermore, it should be able to bond the polyester to a film of polyvinyl alcohol so well that when a laminate of the film of the present invention and polyvinyl alcohol is passed through a staining process to produce a polariser and tested by

6

subjecting it to an environment of 70°C at 95% relative humidity for 300 hours, the polyvinyl alcohol film should shrink only an insubstantial amount, for example about 3% or less, preferably 1.5% or less away from the polyester substrate.

The following non-limiting example is illustrative of the operation of the present invention.

## EXAMPLE

Molten polyethylene terephthalate is extruded onto a cold casting drum to form an amorphous cast film. The thus-formed film is then coated with a 10% aqueous solution of Vinol 205 polyvinyl alcohol by gravure coating to a coating weight of .10 dry pound of coating per thousand square feet (0.49 g/m$^2$) of film. The film is then heated, while being stretched transversely to the direction of its motion, at a temperature in the heating zone of from 97 to 105°C. The film is thus stretched four times its original width. The stretched film is then heated to a temperature in a heating zone of from 208 to 214°C while transversely restrained to crystallise the film. The crystallised film is then cooled to 29°C.

Although very specific embodiments of the invention have been disclosed herein, it is to be understood that further modifications may hereby be suggested to those skilled in the art, and the invention is not limited to such embodiments.

CLAIMS

1.      A process for preparing a substantially uniaxial polyester film which comprises:

   a)  extruding a moving molten web of polyester film; and

   b)  quenching the moving web to solidify it in a substantially amorphous form; and

   c)  applying a coating of a dispersed aqueous composition of polyvinyl alcohol or polyurethane to at least a portion of the surface of said film; and

   d)  stretching the moving web in a direction transverse to the direction of motion while heating the web at a temperature of from its glass transition temperature to 160°C; and

   e)  crystallising the transversely restrained moving web by heating it to a temperature in the range of 130°C to 240°C without stretching said web; and

   f)  cooling said web to substantially ambient atmospheric room temperature.

2.      The process of claim 1 wherein said polyester film comprises polyethylene terephthalate.

3.      The process of claim 1 or 2 wherein the temperature in step (d) ranges from 80°C to 110°C.

4.      The process of claim 3 wherein the temperature in step (d) ranges from 90°C to 100°C.

5.      The process of any of claims 1 - 4 wherein the temperature of step (e) ranges from 150°C to 180°C.

6.      The process of any of claims 1 - 5 wherein said web is stretched from 2 to 6 times its original width.

7.      The process of claim 6 wherein said web is stretched from 2.5 to 4.5 times its original width.

8.      The process of any of claims 1 - 7 wherein step (e) is performed for five seconds or more.

9.      The process of any of claims 1 - 8 wherein the coating composition comprises an aqueous solution of polyvinyl alcohol wherein said polyvinyl alcohol is present is an amount of from 5% to 10% by weight.

10.     The process of claim 9 wherein said polyvinyl alcohol is hydrolysed in an amount of from 33% to 99%.

11.     The process of claim 9 or 10 wherein the coating composition is applied at a coating weight from .07 to 1.0 dry pound of coating per thousand square feet (0.34 to 4.9 g/m$^2$) of unstretched film.

12.     The process of any of claims 1 - 8 wherein the coating composition comprises an aqueous dispersion of polyurethane wherein said polyurethane is present in an amount of from 15% to 40% by weight.

13.     The process of claim 12 wherein the coating composition is applied at a coating weight from .07 to .35 dry pound of coating per thousand square feet (0.34 to 1.7 g/m$^2$) of unstretched film.